# EUROPÄISCHE PATENTSCHRIFT

(11) **EP 3 431 354 B1**
(45) Veröffentlichungstag und Bekanntmachung des Hinweises auf die Patenterteilung: **10.08.2022**
(21) Anmeldenummer: 18179234.2
(22) Anmeldetag: 22.06.2018
(51) Int. Cl.: B60W 30/095, B60W 50/14

(54) **VERFAHREN ZUR BESTIMMUNG EINER TRAJEKTORIE FÜR EIN AUTONOM FAHRENDES KRAFTFAHRZEUG, STEUEREINRICHTUNG UND KRAFTFAHRZEUG**
METHOD FOR DETERMINING A TRAJECTORY FOR AN AUTONOMOUSLY RUNNING VEHICLE, CONTROL DEVICE AND MOTOR VEHICLE
PROCÉDÉ DE DÉTERMINATION D'UNE TRAJECTOIRE POUR UN VÉHICULE AUTOMOBILE À DÉPLACEMENT AUTONOME, DISPOSITIF DE COMMANDE ET VÉHICULE AUTOMOBILE

(30) Priorität: 19.07.2017 DE 102017212373
(43) Veröffentlichungstag der Anmeldung: 23.01.2019
(73) Patentinhaber: Volkswagen Aktiengesellschaft, 38440 Wolfsburg (DE)
(72) Erfinder: Bärecke, Frank, 38444 Wolfsburg (DE); Blumentritt, Marc, 38102 Braunschweig (DE); Kukla, Stefan, 29339 Wathlingen (DE)

(56) Entgegenhaltungen:
- DE-A1-102011 081 159
- DE-A1-102012 215 562
- DE-A1-102013 016 434
- DE-A1-102014 223 000
- DE-A1-102015 013 143
- DE-A1-102015 208 790
- DE-A1-102016 121 873
- US-A1- 2017 090 478

## Beschreibung

Die Erfindung betrifft ein Verfahren zur Bestimmung einer Trajektorie für eine autonom fahrendes Kraftfahrzeug sowie eine Steuereinrichtung und ein Kraftfahrzeug.

Um die Belastung für ein Kraftfahrzeug und die Komforteinbußen bei dessen Insassen im Fall einer autonomen Steuerung des Fahrzeugs minimal zu halten, ist es notwendig, Variationen in der Geschwindigkeit oder der Fahrtrajektorie zu berücksichtigen. Zwingend wird diese Betrachtung, wenn ein Hindernis auftritt und eine Verfolgung der ursprünglichen Trajektorie zu einer Beschädigung des Fahrzeugs oder einer Verletzung der Insassen führen würde. Bei der Wahl einer Alternativtrajektorie ist es erstrebenswert, die Alternativtrajektorie zu wählen, welche zu einer minimalen Belastungen des Kraftfahrzeugs und der Fahrzeuginsassen führt.

In der DE 10 2013 200 385 A1 werden ein Verfahren und eine Vorrichtung zur Unterstützung eines Fahrers eines Fahrzeugs bei einer Fahrt auf unebenem Gelände beschrieben. In einer Funktionsausprägung ist es vorgesehen, Informationen zur Führung des Fahrzeugs auf einer idealen Trajektorie zu ermitteln und das Kraftfahrzeug mittels eines Fahrerassistenzsystems selbstständig zu lenken, wobei Informationen über ein Umfeld um das Kraftfahrzeug herum eingelesen werden, um weitere Risiken zu vermeiden.

In der DE 10 2012 018 122 A1 wird ein autonomes Führen eines Kraftfahrzeugs auf einem Fahrweg unter Umgehung von Unebenheiten beschrieben. Dabei wird ein autonomes Führen eines Kraftfahrzeugs auf einem Fahrweg in Abhängigkeit von einer geplanten Soll-Trajektorie vorgeschlagen, wobei die Soll-Trajektorie in Abhängigkeit von erkannten Unebenheiten geplant wird.

In der US 2017/0090478 A1 werden Systeme und Verfahren für eine autonome Navigation eines Fahrzeugs beschrieben. Dabei ist es vorgesehen, eine Trajektorie mittels eines Minimierungsverfahrens zu berechnen.

In der DE 10 2013 016 434 A1 ist ein Verfahren zur Steuerung eines Kraftfahrzeugs offenbart. In dem Verfahren ist es vorgesehen, unter wenigstens einer Randbedingung fahrbare Trajektorien durch eine Auswertung von Umfelddaten zu berechnen.

Die DE 10 2015 013 143 A1 offenbart ein Verfahren zur vorausschauenden Umkippverhinderung eines Fahrzeugs. In dem Verfahren ist es vorgesehen, durch selbsttätige Regeleingriffe eines den Antrieb und/oder die Bremsen betreffendes Regelsystems einer Umkippgefahr des Fahrzeugs entgegenzuwirken.

Die DE 10 2016 121 873 A1 offenbart eine dynamische Spurpositionierung für eine verbesserte Radfahrersicherheit. Ein beschriebenes Fahrzeug umfasst eine Steuerung, die dazu eingerichtet ist, ein Lenkrad automatisch zu steuern, um das Fahrzeug entlang eines Kollisionsvermeidungswegs zu lenken.

Es ist eine Aufgabe der Erfindung, ein Verfahren bereitzustellen, welches eine Belastung eines Kraftfahrzeugs und der Kraftfahrzeuginsassen durch ein Hindernis minimiert. Erfindungsgemäß wird ein Verfahren zur Bestimmung einer Alternativtrajektorie für ein autonom fahrendes Kraftfahrzeug mit den in Anspruch 1 abgegebenen Merkmalen bereitgestellt.

Mit anderen Worten wird zumindest ein Teilstück einer ursprünglichen Trajektorie durch eine Alternativtrajektorie für ein Kraftfahrzeug ersetzt, wenn durch eine Fahrzeugsensorik ein Hindernis erfasst wird. Dabei wird die Alternativtrajektorie der Art gewählt, dass sie eine minimale Störungssumme aufweist. Eine andere Bezeichnung für eine solche störungssumme ist auch Kostenfunktion. Die Störungssumme wird aus Störungssummanden gebildet, welche aus einem jeweiligen Gewichtungsfaktor und einem Störungswert bestehen.

Eine Trajektorie kann eine Bahnkurve sein, welche dem Kraftfahrzeug beispielsweise in Abhängigkeit der Zeit oder des Ortes einen Ort, eine Geschwindigkeit und/oder eine Beschleunigung zuweisen kann. Das autonom fahrende Kraftfahrzeug kann eine Steuervorrichtung umfassen, welche dazu eingerichtet ist, die Alternativtrajektorie zu bestimmen und das Kraftfahrzeug gemäß der Alternativtrajektorie zu steuern. Das Kraftfahrzeug kann auch eine Fahrzeugsensorik umfassen, welche dazu eingerichtet ist, eine Umgebung des Kraftfahrzeugs zu erfassen. Ein Hindernis kann ein Objekt in der Umgebung des Kraftfahrzeugs sein, welches das Kraftfahrzeug, die Fahrzeuginsassen und/oder den Straßenverkehr gemäß einer vorbestimmten Klassifikation gefährden kann. Bei dem Hindernis kann es sich beispielsweise um ein Schlagloch, einen Fels oder andere Verkehrsteilnehmer handeln. Die Steuervorrichtung kann einen Mikroprozessor und/oder einen Mikrocontroller für die Durchführung des Verfahrens umfassen. Eine Alternativtrajektorie kann eine Trajektorie sein, welche zumindest ein Teilstück einer ursprünglichen Trajektorie ersetzt. Die Alternativtrajektorie kann derart gewählt werden, dass sie eine minimale Störungssumme aufweist. Die Störungssumme ist ein Wert, welcher eine jeweilige Alternativtrajektorie hinsichtlich ihrer Belastung des Kraftfahrzeugs und/oder der Insassen bewertet. Die für eine Situation optimale Alternativtrajektorie ist durch einen minimalen Wert der Störungssumme definiert. Die Störungssumme ist die Summe zumindest eines Störungssummanden, welcher aus einem Störungswert und einem Gewichtungsfaktor besteht. Sie stellt somit eine ganzheitliche Störungsbilanz dar, welche für eine Optimierung eine Alternativtrajektorie benutzt werden kann Ein jeweiliger Störungswert beschreibt das Ausmaß einer negativen Einwirkung auf das Kraftfahrzeug oder die Fahrzeuginsassen. Ein jeweiliger Gewichtungsfaktor wird mit dem Störungswert multipliziert und ermöglicht es somit, bestimmte Arten von Störungen zu gewichten. Der Minimalwert der Störungssumme kann sich auf eine Menge an Störungssumme beziehen, welche einer Schar von Trajektorien zugeordnet ist. Es kann beispielsweise sein, dass durch die Steuervorrichtung mehrere Alternativtrajektorien unter Anwendung unterschiedlicher Algorithmen berechnet werden, wenn durch die Fahrzeugsensorik beispielsweise ein Schlagloch auf der Straße erfasst wird. Die Bestimmung einer Alternativtrajektorie kann mittels eines gradientenbasierten Optimierungsverfahrens, mittels neuronaler Netze oder anderen Verfahren erfolgen. Um eine optimale Alternativtrajektorie zu bestimmen, kann die Alternativtrajektorie ausgewählt werden, welche die geringste Störungssumme aller Alternativtrajektorien aufweist. Eine Entscheidungslogik zur Wahl einer alternativ Trajektorie kann zum Beispiel als Fuzzy-Regler abgebildet werden Diese Alternativtrajektorie kann zumindest einen Teilabschnitt der ursprünglichen Trajektorie ersetzen. Durch das Verfahren ergibt sich der Vorteil, dass ein objektives Auswahlkriterium zur ganzheitlichen Bestimmung der optimalen Alternativtrajektorie bereitgestellt wird.

Es ist vorgesehen, dass eine Protokolldatei in der Steuervorrichtung gespeichert wird, wobei diese die durch die Fahrzeugsensorik erfassten Informationen, die ursprüngliche Trajektorie, die Alternativtrajektorien und die ihnen zugeordneten Werte der Störungssummanden umfasst. Mit anderen Worten werden Daten, welche das erfasste Hindernis betreffen, zusammen mit den möglichen Alternativtrajektorien samt deren Störungssummanden in einer Protokolldatei gespeichert. Beispielsweise kann die Steuervorrichtung die von der Fahrzeugsensorik erfassten Informationen betreffend das Hindernis in einem Speicher hinterlegen. Dazu kann die Steuervorrichtung berechnete Alternativtrajektorien und die jeweils zugehörigen Störungssummanden speichern. Schließlich kann auch die gewählte Alternativtrajektorie in dem Protokoll gespeichert werden. Dadurch ergibt sich der Vorteil, dass der Entscheidungsprozess nachvollziehbar protokolliert ist. Somit ist es möglich, Entscheidungs- und Optimierungsprozesse nachträglich nachvollziehen und verbessern zu können. Dazu kann eine Auswertung und oder Optimierung beispielsweise der Algorithmen oder der Gewichtungsfaktoren in dem Kraftfahrzeug und/oder zentral bei dem Hersteller erfolgen. Die Gewichtungsfaktoren nachträglich anzupassen, wenn ein Optimierungsbedarf bei der Auswahlverfahren festgestellt wird.

Eine Weiterbildung des Verfahrens sieht vor, dass zumindest ein Störungssummand einer Fahrzeugdynamik und/oder einem Fahrzeugverschleiß und/oder einem Kraftstoffverbrauch und/oder einer Belastung eines Fahrzeuginsassen mittels einer Quantifizierungsfunktion beschrieben. Mit anderen Worten quantifiziert zumindest ein Störungssummand eine Fahrzeugdynamik und/oder einen Fahrzeugverschleiß und/oder einen Kraftstoffverbrauch und/oder ein negatives subjektives Empfinden eines Fahrzeuginsassen, welches nicht durch einen der anderen Störungssummanden beschrieben werden kann, einer Alternativtrajektorie. Die Fahrzeugdynamik kann beispielsweise eine Längsdynamik, eine Querdynamik und/oder eine Vertikaldynamik des Fahrzeugs umfassen. Der Fahrzeugverschleiß kann beispielsweise den durch eine jeweilige Alternativtrajektorie hervorgerufene Bauteilverschleiß umfassen. Der Kraftstoffverbrauch kann beispielsweise einen erhöhten Benzinverbrauch oder eine erhöhte Akkuentladung bei der Befahrung einer jeweiligen Alternativtrajektorie beschreiben. Als weiteres Beispiel kann mittels des Störungssummanden, betreffend die Belastung eines Fahrzeuginsassen ein geringer Abstand zu einem Baum oder ein kurzzeitiges Befahren einer anderen Fahrspur beim Folgen einer Alternativtrajektorie bewertet werden. Es kann sein, dass die genannten Beispiele in den jeweiligen Situationen kein Risiko darstellen, jedoch ein negatives Empfinden bei Fahrzeuginsassen hervorrufen. Dadurch ergibt sich der Vorteil, dass es im Rahmen des Verfahrens ermöglicht wird, eine Alternativtrajektorie zu wählen, welche möglichst geringe negative Auswirkungen auf das Kraftfahrzeug und/oder die Insassen hat.

Eine Weiterbildung sieht vor, dass die Alternativtrajektorie einen Parameter eines adaptierten Fahrwerks oder eines adaptierten Vertikaldynamikregelsystems festlegt. Mit anderen Worten beschreibt die Alternativtrajektorie neben einem Streckenverlauf auch einen Parameter eines adaptierten Fahrwerks oder eines adaptierten Vertikaldynamikregelsystems. Beispielsweise kann die Trajektorie Werte betreffend das Dämpfungsverhalten eines Dämpfer umfassen. Dadurch ergibt sich der Vorteil, dass ein adaptives Fahrwerk und/oder ein adaptives Vertikaldynamikregelsystem der Art angesteuert wird, dass die Auswirkungen eines Hindernisses minimiert werden.

Einer Weiterbildung sieht vor, dass der zumindest eine Gewichtungsfaktor abhängig ist von anderen Störungssummanden. Mit anderen Worten ist der zumindest eine Gewichtungsfaktor keine Konstante sondern ein Wert, der von anderen Störungssummanden abhängig ist. So kann es beispielsweise sein, dass ein Gewichtungsfaktor, welcher sich auf die Querdynamik des Kraftfahrzeugs bezieht abhängig ist von dem Störungssummanden, welcher sich auf die Geschwindigkeit des Kraftfahrzeugs bezieht. Somit kann berücksichtigt werden, dass eine große Querdynamik des Kraftfahrzeugs bei einer hohen Geschwindigkeit größere negative Auswirkungen hat, als bei einer geringen Geschwindigkeit. Durch die Erfindung ergibt sich der Vorteil dass bestimmte Korrelationen berücksichtigt werden können.

Eine Weiterbildung der Erfindung sieht vor, dass zumindest ein Gewichtungsfaktor in Abhängigkeit von einer Benutzereingabe eingestellt wird. Mit anderen Worten kann ein Fahrzeuginsasse zumindest einen Wert eines Gewichtungsfaktors verändern. Beispielsweise kann ein Fahrzeuginsasse den Gewichtungsfaktor, welcher einem Fahrzeugverschleiß zugeordnet ist erhöhen damit dieser bei der Wahl der Alternativtrajektorie stärker berücksichtigt wird. Durch die Erfindung ergibt sich der Vorteil, dass es einem Fahrzeuginsassen ermöglicht wird, Prioritäten festzulegen nach denen eine Alternativtrajektorie ausgewählt werden soll.

Eine Weiterbildung sieht vor, dass bei dem Ersetzen eines Teilstücks der ursprünglichen Trajektorie durch die Alternativtrajektorie ein Warnsignal ausgegeben wird. Mit anderen Worten führt das Ersetzen eines Teilstücks der ursprünglichen Trajektorie durch eine Alternativtrajektorie zur Ausgabe eines Warnsignals. Beispielsweise kann ein Warnton oder ein visuelles Warnsignal ausgegeben werden, verbunden mit genauen Informationen über den Verlauf der Alternativtrajektorie, welche auf einem Bildschirm im Fahrzeuginneren angezeigt werden können. Dadurch ergibt sich der Vorteil, dass die Fahrzeuginsassen auf das Einleiten einer Alternativtrajektorie reagieren und sich beispielsweise festhalten können.

Eine Weiterbildung sieht vor, dass zumindest ein Teilstück der Alternativtrajektorie mittels eines vorbestimmten zeitoptimierten Verfahrens berechnet wird, falls eine erforderliche zeitliche Distanz zum Hindernis unterschritten wird. Mit anderen Worten wird zumindest ein Teilstück der Alternativtrajektorie mittels eines Verfahrens berechnet, welches zeitoptimiert ist, falls eine erforderliche zeitliche Distanz zum Hindernis unterschritten wird. Beispielsweise kann die Steuervorrichtung dazu eingerichtet sein, einen Algorithmus zur Berechnung der Alternativtrajektorie zu verwenden, falls ein Hindernis kurzfristig mittels der Fahrzeugsensorik erfasst wird und die zur Verfügung stehende Zeit nicht ausreicht um einen üblichen Algorithmus zu verwenden. Es kann sein, dass dieser Algorithmus nicht alle Störungssummanden zur Bildung einer Störungssumme verwendet. Es kann sein, dass die gesamte Alternativtrajektorie mittels des zeitoptimierten Verfahrens berechnet wird oder ein erstes Teilstück einer Alternativtrajektorie, wobei ein restliches Teilstück der Alternativtrajektorie mittels eines üblichen Algorithmus berechnet wird. Dadurch ergibt sich der Vorteil, dass auch kurzfristig erfasste Hindernisse reagiert werden kann.

Zu der Erfindung gehört auch die Steuervorrichtung für das Kraftfahrzeug. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung umfasst auch ein Kraftfahrzeug, welches eine Steuervorrichtung zur Durchführung eines der erfindungsgemäßen Verfahren, sowie eine Fahrzeugsensorik umfasst.

Zu der Erfindung gehören auch Weiterbildungen des erfindungsgemäßen Kraftfahrzeugs oder der erfindungsgemäßen Steuervorrichtung, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: mögliche Trajektorien zur Umfahrung eines erfassten Hindernisses;
- Fig. 2: eine mögliche Aufstellung von Störungssummanden verschiedener Alternativtrajektorien; und
- Fig. 3: einen möglichen Verlauf eines erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

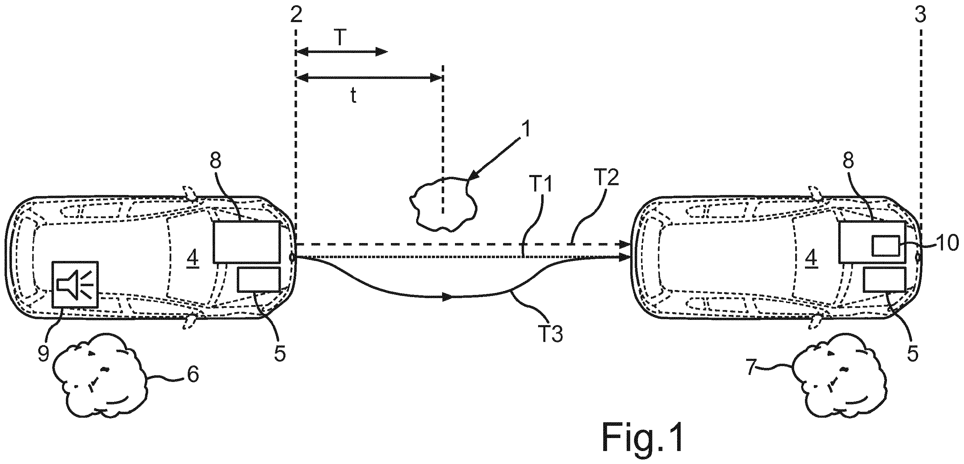

Fig. 1 zeigt mögliche Trajektorien T1, T2, T3 zur Umfahrung eines erfassten Hindernisses 1. Das Ausführungsbeispiel geht davon aus, dass ein Kraftfahrzeug 4 einer ursprünglichen

Trajektorie folgt, auf welcher durch eine Fahrzeugsensorik 5 ein Hindernis 1 erfasst wird. Als Reaktion darauf soll eine Alternativtrajektorie T1, T2, T3 bestimmt werden. Fig. 1. zeigt die ursprüngliche Trajektorie T1 zwischen zwei Positionen 2, 3 des Kraftfahrzeugs 4 und zwei Alternativtrajektorien T2, T3. Das Hindernis 1 kann beispielsweise ein Schlagloch auf einer Straße sein, welches von einer Fahrzeugsensorik 5 erfasst wird. Die Fahrzeugsensorik 6 kann dazu eingerichtet sein, ein Fahrbahnhöhenprofil zu erfassen. Zusätzlich können noch weitere Hindernisse, wie beispielsweise zwei Bäume 7 durch die Fahrzeugsensorik 5 erfasst werden. Es kann sein, dass eine Steuervorrichtung 8 des Kraftfahrzeugs 4 drei Alternativtrajektorien T1, T2, T3 bestimmt hat, wobei eine mit der ursprünglichen Trajektorie T1 für das Teilstück übereinstimmt, eine Alternativtrajektorie T2 ein Durchfahren des Schlaglochs mit einer Geschwindigkeitsanpassung und eine Anpassung eines adaptierten Vertikaldynamikregelsystems des Kraftfahrzeugs 4 vorsieht, und eine dritte T3 ein Umfahren des Schlaglochs vorsieht. Es kann sein, dass die Steuervorrichtung 8 für jede der Alternativtrajektorien T1, T2, T3 eine Störungssumme S1, S2, S3 berechnet, welche Störungssummanden y1, y2, y3, y4, y5, y6, y7 umfasst, welche eine Vertikaldynamik des Kraftfahrzeugs y1 , eine Längsdynamik y2 des Kraftfahrzeugs 4 , eine Querdynamik y3 des Kraftfahrzeugs 4 , eine Belastung der Fahrzeuginsassen y4, einen Verschleiß der Achse y5, einen Verschleiß der Reifen y6 und einen erhöhten Kraftstoffverbrauch y7 betreffen können. Es kann sein, dass die Belastung der Fahrzeuginsassen y5 aufgrund der Annäherung des Kraftfahrzeugs an die Bäume während eines Ausweichmanövers einen höheren Wert aufweist als bei den anderen Alternativtrajektorien. Es kann sein, dass die Trajektorie T3, welche ein Ausweichmanöver beschreibt, die geringste Störungssumme S3 aufweist. Es kann sein, dass die Steuervorrichtung 8 daraufhin die Alternativtrajektorie T3, welche ein Ausweichen beschreibt auswählt und das Kraftfahrzeug 4 entsprechend steuert. Es kann sein, dass die Steuervorrichtung 8 die Fahrzeuginsassen mittels eines Warnsignals 9 im Fahrzeuginneren über die Einleitung und den Verlauf der Alternativtrajektorie informiert. In einem nächsten Schritt kann die Steuervorrichtung 8 das Kraftfahrzeug 4 entlang der Trajektorie T3, welche die geringste Störungssumme S3 aufweist, steuern.

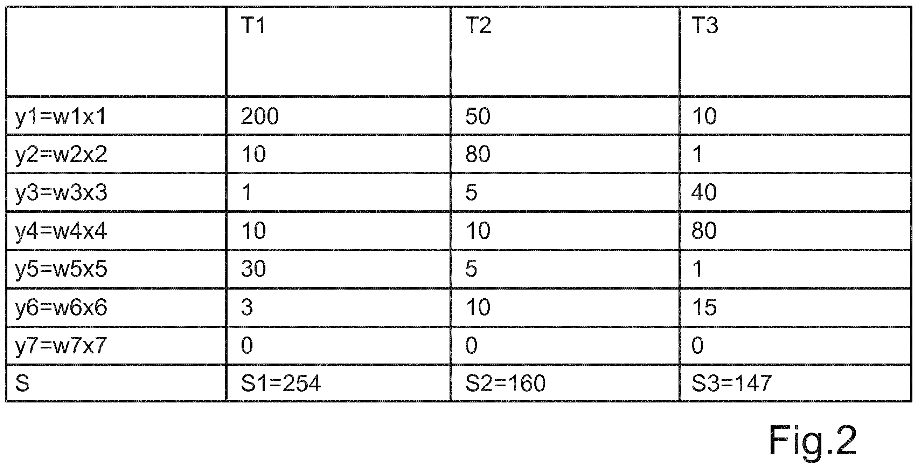

Fig. 2 zeigt eine mögliche Auflistung der Störungssummanden y1, y2, y3, y4, y5, y6, y7 der drei Alternativtrajektorien T1, T2, T3 welche eine Vertikaldynamik des Kraftfahrzeugs y1 , eine Längsdynamik y2 des Kraftfahrzeugs 4 , eine Querdynamik y3 des Kraftfahrzeugs 4 , eine Belastung der Fahrzeuginsassen y4, einen Verschleiß der Achse y5, einen Verschleiß der Reifen y6 und einen erhöhten Kraftstoffverbrauch y7 betreffen können. Es kann sein das jeder Störungssummand y1, y2, y3, y4, y5, y6, y7 das Produkt aus einem Störungswert x1, x2, x3, x4, x5, x6, x7 und einem jeweiligen Gewichtungsfaktor w1, w2, w3, w4, w5, w6, w7 ist. Es kann sein, dass zumindest ein Gewichtungsfaktor w1, w2, w3, w4, w5, w6, w7 von dem Wert zumindest eines Störungssummanden y1, y2, y3, y4, y5, y6, y7 abhängig ist.

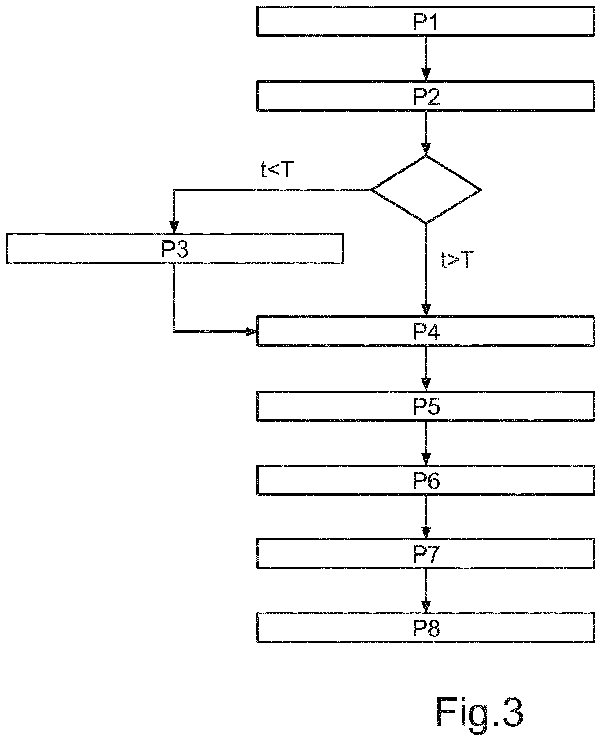

Fig. 3 zeigt einen möglichen Verlauf eines erfindungsgemäßen Verfahrens. Es kann sein, dass ein Hindernis 1 durch die Fahrzeugsensorik 5 erfasst wird (P1). Daraufhin kann eine zeitliche Distanz t bis zum Erreichen des Hindernisses 1 bestimmt werden (P2). Es kann sein, dass die zeitliche Distanz t eine erforderliche zeitliche Distanz T zum Hindernis 1 unterschreitet. Es kann sein, dass daraufhin ein erstes Teilstück einer Alternativtrajektorie T1,T2,T3 mittels eines zeitoptimierten Verfahrens berechnet wird (P3). Ein restlicher Teil kann mittels eines üblichen Verfahrens berechnet werden. Es kann sein, dass die zeitliche Distanz t eine erforderliche zeitliche Distanz T zum Hindernis 1 überschreitet, wodurch die Trajektorien T1, T2, T3 mittels eines gewöhnlichen Algorithmus bestimmt werden können (P4). Die zu verfolgende Trajektorie T1, T2, T3 kann mittels eines Vergleichs der Störungssummen S1, S2, S3 gewählt werden (P5). Es kann sein, dass vor dem Ersetzen des Teilstücks der ursprünglichen Trajektorie durch eine Alternativtrajektorie T1, T2, T3 ein Warnsignal 9 ausgegeben wird (P5). Die Steuervorrichtung kann das Kraftfahrzeug entlang der gewählten Alternativtrajektorie steuern (P6). Es kann sein, dass eine Protokolldatei 10 in der Steuervorrichtung 8 gespeichert wird, wobei diese die durch die Fahrzeugsensorik 5 erfassten Informationen, die ursprüngliche Trajektorie, die zumindest eine Alternativtrajektorie T1, T2, T3 und die ihr zugeordneten Werte der Störungssummanden y1, y2, y3, y4, y5, y6, y7 umfasst (P7). Es kann sein, dass ein Insasse des Kraftfahrzeugs 4 einen Wert eines Gewichtungsfaktors w1, w2, w3, w4, w5, w6, w7 betreffend eine Querdynamik x3 des Kraftfahrzeugs 4 erhöht, damit Alternativtrajektorien T1,T2,T3, welche zu einer großen Querdynamik des Kraftfahrzeugs führen, nachrangig durchgeführt werden (P8). Auf Grundlage der Alternativtrajektorie kann dann die Steuervorrichtung 8 das Kraftfahrzeug 4 um das Hindernis 1 herum führen.

Um für ein autonomes Kraftfahrzeug ein maximales Komfortniveau zu erreichen ist teilweise eine Betrachtung von Geschwindigkeitsvariationen oder einer anderen Fahrtrajektorie sinnvoll.

Zwingend wird diese Betrachtung, wenn bei normaler Weiterfahrt, ein großes Schlagloch oder eine Bremsschwelle (Speedbreaker) das Fahrwerk beschädigen würde oder eine Verletzung der Insassen mögliche werden würde.

In einer ersten Betrachtung könnte man hier einfach eine Maximalgeschwindigkeit bestimmen und dann mit dieser in der Fahrspur über die Unebenheit fahren.

Die Nachteile dieser Vorgehensweise sind offensichtlich:
Unabhängig von der Größe des Sonderereignisses wird immer der maximale Diskomfort in Kauf genommen.

Für kleinere Hindernisse, welche unterhalb des maximal vertretbaren Diskomforts liegen, wird immer der vollständige Diskomfort in Kauf genommen.

Ausgangspunkt ist die Definition eines ganzheitlichen Störungsbilanz als gewichtete Summe aller einzelnen Störungen. Als Störung wird alles gewertet, was gegenüber einer Fahrt ohne vertikaldynamisches Hindernis verschlechtert ist. Vergleichbar mit einer Kostenfunktion in der Regelungstechnik.

Im Besonderen umfasst dies Vertikaleinträge Quer- und Längs-(ruck-)einträge, Fahrerirritationen aufgrund der Fahrspur, ein erhöhter Kraftstoffverbrauch und Bremsenverschleiß, und Bauteilbelastungen (Verschleiß Antriebswelle, Reifen, ...).

Das Störungsmaß soll dabei in erster Linie direkt aus den einzelnen Größen ermittelt werden. Es ist nicht zwingend proportional verknüpft, sondern angemessen bewertet. Eine Kombination verschiedener Einträge kann, sofern dies als sinnvoll erachtet wird, die Gewichtung der Störungen erhöhen, verringern oder erneut kombiniert gewertet werden.

In einer Beispielsituation, welche eine Fahrt mit einem Schlagloch als Hindernis betrifft, kann es zu einer Bewertung von drei Fahrszenarien kommen: Eine ungebremste Durchfahrt, eine langsame Durchfahrt und ein umfahren des Schlagloches.

Es kann abgeleitet werden, dass hier das Ausweichen das günstigste Szenario ist.

Sobald etwas weniger Platz verfügbar ist, z.B. weil das Schlagloch etwas breiter ist kann aber das Ausweichen unmöglich werden. Ist das Schlagloch wesentlich kürzer, kann z.B. das Durchfahren ohne Geschwindigkeitsanpassung die optimale Option sein.

Die Optimierung des Komforts, dass heißt die Minimierung der Störung, stellt eine große Herausforderung nach der Definition der ganzheitlichen Störungsbilanz dar.

Hierfür stehen neben gradientenbasierten Optimierungsverfahren auch neue Verfahren wie die Suche einer optimalen Trajektorie (inklusive Geschwindigkeits-verlauf und Ansteuerung der Vertikaldynamikregelung) mit neuronalen Netzen zur Verfügung. Eine Entscheidungslogik kann z.B. als Fuzzy Regler abgebildet werden.

Die Anwendung eines Optimierungsverfahren zur ganzheitlichen Optimierung der zu absolvierenden Fahrsituation wird erst durch die ganzheitliche Störungsbilanz ermöglicht. Die Beachtung von "harten Einschränkungen" (Fahrbahnrand, Abstand zu Fußgängern, Geschwindigkeitslimits) ist vom Optimierungsalgorithmus sicherzustellen. Gibt es neben harten Grenzen z.B. für die Vorbeifahrt an Fußgängern einen "kann Bereich" so ist es möglich ein eindringen als Störung in die ganzheitliche Störungsbilanz aufzunehmen.

Bei der Einführung einer ganzheitlichen Optimierungsfunktion liegen keine ausreichende Erfahrungen vor, wie welche Diskomforteinträge gegeneinander gewichtet werden sollten.

Zur Plausibilisierung der Gewichtungsfaktoren, kann das Kraftfahrzeug (im Prüfgelände bei ausgewählten Hindernissen) verschiedene semioptimale Trajektorien mit einer gleichen Störung anfahren. Anschließend können Experten bewerten, ob die in Kauf genommenen Störungen tatsächlich gleich sind oder eine Anpassung der Gewichtungen vorzunehmen ist.

Für reale Fahrsituationen können in Einzelfällen die Umfeldbedingungen gespeichert werden, in denen lokale Optima (mit einer ähnlichen Störung) für sehr verschiede Trajektorien gefunden wurden. Hier können die Experten untersuchen, ob die gefundenen Trajektorien tatsächlich gleichwertig sind oder eine Anpassung der Gewichtungen vorzunehmen ist.

Die rechenaufwändigen Optimierungsverfahren werden in einem zeitkritischen Umfeld durchlaufen. Hierbei kann unter Umständen die Rechenzeit nicht ausreichen um eine optimale Lösung zu finden. Das Kraftfahrzeug kann also eine teiloptimierte Trajektorie bestimmen bevor der Optimierungsprozess abgeschlossen ist.

Hier wird vorgeschlagen, die Umfelddaten in einem Speicher abzulegen und anschließend offline auszuwerten, ob ein Optimierungspotential an den Algorithmen zur Trajektorienbestimmung zu finden ist. Hierbei können die Daten zum OEM zurückgespielt werden und dort eine Optimierung der Algorithmen vorgenommen werden. Dabei können die Daten an einen Zentralrechner (Cloud) übermittelt werden. Die Offline Auswertung kann bei geeigneter Methodik, beispielsweise einer künstlichen Intelligenz (KI) in der Steuervorrichtung des Kraftfahrzeugs stattfinden.

Es ist möglich, dass sich je nachdem wie viele Fahrer im Fahrzeug sind und welche Aktionen von diesen ausgeführt werden andere Gewichtungsfaktoren verwendet werden sollten.

z.B. ist einem schlafenden Passagier relativ egal, in welchem Abstand ein Auto an einem Hindernis vorbeifährt. Ein Passagier, welcher Aufmerksam die Fahrbahn beobachtet, kann durch Hinweise auf das Umfahren eines Schlagloches (Augmented Reality) eine deutlich höhere Querbeschleunigung und Spurabweichung akzeptieren.

Ein in ein Buch vertiefter Passagier kann durch einen kurzen Ruck, ein Licht oder einen Ton auf eine bevorstehende Richtungsänderung des Fahrzeuges aufmerksam gemacht werden.

Es ist auch möglich, dass verschiedene Passagiere andere Gewichtungen für ihr Wohlbefinden haben. Aus diesem Grund kann es Sinnvoll sein, einzelne Gewichtungsfaktoren begrenzt individuell anpassbar zu machen.

Insgesamt zeigt das Beispiel, wie durch die Erfindung eine Belastung eines Kraftfahrzeugs und der Insassen minimiert wird.

### Bezugszeichenliste

1 Hindernis
2 Anfangsposition
3 Endposition
4 Kraftfahrzeug
5 Fahrzeugsensorik
6 Baum
7 Baum
8 Steuervorrichtung
9 Warnsignal
10 Protokolldatei
T1-T3 Alternativtrajektorien
S1-S3 Störungssummen
y1-y7 Störungssummanden
x1-x7 Störungswerte
w1-w7 Gewichtungsfaktoren
t zeitliche Distanz zum Hindernis
T erforderliche zeitliche Distanz

## Patentansprüche

1. Verfahren zur Bestimmung einer Alternativtrajektorie (T1, T2, T3) für ein autonom fahrendes Kraftfahrzeug (4), wobei ausgehend von einer ursprünglichen Trajektorie bei einer Erfassung (P1) eines Hindernisses (1) durch eine Fahrzeugsensorik (5) mehrere Alternativtrajektorien (T1, T2, T3) unter Anwendung unterschiedlicher Algorithmen für das Kraftfahrzeug (4) durch eine Steuervorrichtung (8) berechnet werden, welche zumindest ein Teilstück der ursprünglichen Trajektorie des Kraftfahrzeugs (4) ersetzen, wobei
die Alternativtrajektorie (T1, T2, T3) ausgewählt wird, welche eine minimale Störungssumme (S1, S2, S3) aus Störungssummanden (y1-y7), bestehend aus einem jeweiligen Gewichtungsfaktor (w1-w7) und einem jeweiligen Störungswert (x1-x7), aufweist, und
diese Alternativtrajektorie zumindest ein Teilstück der ursprünglichen Trajektorie ersetzt,
**dadurch gekennzeichnet, dass** eine Protokolldatei (10) in der Steuervorrichtung (8) gespeichert wird, wobei diese die durch die Fahrzeugsensorik (5) erfassten Informationen betreffend das Hindernis (1), die ursprüngliche Trajektorie, die berechneten Alternativtrajektorien (T1, T2, T3) und die jeweiligen Werte der Störungssummanden (S1, S2, S3) umfasst.

2. Verfahren nach Anspruch 1, **dadurch gekennzeichnet, dass** zumindest ein Störungssummand (y1-y7) eine Fahrzeugdynamik und/oder einen Fahrzeugverschleiß und/oder einen Kraftstoffverbrauch und/oder eine Belastung eines Fahrzeuginsassen mittels einer Quantifizierungsfunktion beschreibt.

3. Verfahren nach einem der vorhergehenden Ansprüche, **dadurch gekennzeichnet, dass** die Alternativtrajektorie (T1, T2, T3) einen Parameter eines adaptiven Fahrwerks und/oder eines adaptiven Vertikaldynamikregelsystems festlegt.

4. Verfahren nach einem der vorhergehenden Ansprüche, **dadurch gekennzeichnet, dass** zumindest ein Gewichtungsfaktor (w1-w7) abhängig ist von anderen Störungssummanden (y1-y7).

5. Verfahren nach einem der vorhergehenden Ansprüche, **dadurch gekennzeichnet, dass** der Wert zumindest eines Gewichtungsfaktors (w1-w7) in Abhängigkeit von einer Benutzereingabe eingestellt wird.

6. Verfahren nach einem der vorhergehenden Ansprüche, **dadurch gekennzeichnet, dass** bei dem Ersetzen eines Teilstücks der ursprünglichen Trajektorie durch die Alternativtrajektorie (T1, T2, T3) ein Warnsignal (9) ausgegeben wird.

7. Verfahren nach einem der vorhergehenden Ansprüche, **dadurch gekennzeichnet, dass** zumindest ein Teilstück der Alternativtrajektorie (T1, T2, T3) mittels eines vorbestimmten zeitoptimierten Verfahrens berechnet wird, falls eine erforderliche zeitliche Distanz (T) zum Hindernis (1) unterschritten wird.

8. Steuervorrichtung (8), eingerichtet zur Durchführung eines der vorhergehenden Verfahren.

9. Kraftfahrzeug (4), umfassend eine Steuervorrichtung nach Anspruch 8.

## Claims

1. Method for determining an alternative trajectory (T1, T2, T3) for a self-driving motor vehicle (4) wherein, starting from an original trajectory, when an obstacle (1) is detected (P1) by a vehicle sensor system (5), multiple alternative trajectories (T1, T2, T3) for the motor vehicle (4) are calculated by a control device (8) through the use of various algorithms, which replace at least a portion of the original trajectory of the motor vehicle (4), wherein
the alternative trajectory (T1, T2, T3) that has a minimum disturbance sum (S1, S2, S3) of disturbance summands (yl-y7), consisting of a respective weighting factor (wl-w7) and a respective disturbance value (xl-x7), is selected, and
this alternative trajectory replaces at least a portion of the original trajectory,
**characterized in that** a log file (10) is stored in the control device (8), wherein this log file comprises the information collected by the vehicle sensor system (5) and relating to the obstacle (1), the original trajectory, the calculated alternative trajectories (T1, T2, T3) and the respective values of the disturbance summands (S1, S2, S3).

2. Method according to Claim 1, **characterized in that** at least one disturbance summand (yl-y7) describes vehicle dynamics and/or vehicle wear and/or fuel consumption and/or stress on a vehicle occupant by means of a quantification function.

3. Method according to one of the preceding claims, **characterized in that** the alternative trajectory (T1, T2, T3) defines a parameter of an adaptive suspension system and/or an adaptive vertical dynamics control system.

4. Method according to one of the preceding claims, **characterized in that** at least one weighting factor (wl-w7) depends on other disturbance summands (y1-y7).

5. Method according to one of the preceding claims, **characterized in that** the value of at least one weighting factor (wl-w7) is set according to a user input.

6. Method according to one of the preceding claims, **characterized in that** when a portion of the original trajectory is replaced by the alternative trajectory (T1, T2, T3), a warning signal (9) is issued.

7. Method according to one of the preceding claims, **characterized in that** at least a portion of the alternative trajectory (T1, T2, T3) is calculated by means of a predefined time-optimized method if the temporal distance (T) to the obstacle (1) falls below a required value.

8. Control device (8) configured to carry out one of the preceding methods.

9. Motor vehicle (4) comprising a control device according to Claim 8.

## Revendications

1. Procédé de détermination d'une trajectoire alternative (T1, T2, T3) pour un véhicule automobile à conduite autonome (4), une pluralité de trajectoires alternatives (T1, T2, T3) étant calculées à partir d'une trajectoire d'origine, lorsqu'un obstacle (1) est détecté (P1) par un système de capteurs de véhicule (5), par un dispositif de commande (8) à l'aide de différents algorithmes qui sont destinés au véhicule automobile (4) et qui remplacent au moins une partie de la trajectoire d'origine du véhicule automobile (4),
la trajectoire alternative (T1, T2, T3) sélectionnée étant celle qui comporte une somme de perturbation minimale (S1, S2, S3) formée d'opérandes d'addition de perturbation (y1-y7) comprenant un facteur de pondération respectif (w1-w7) et une valeur de perturbation respective (x1-x7), et
cette trajectoire alternative remplaçant au moins une partie de la trajectoire d'origine,
**caractérisé en ce qu'**un fichier journal (10) est mémorisé dans le dispositif de commande (8), ledit fichier journal contenant des informations acquises par le système de capteurs de véhicule (5) et relatives à l'obstacle (1), la trajectoire d'origine, les trajectoires alternatives calculées (T1, T2, T3) et les valeurs respectives des opérandes d'addition de perturbation (S1, S2, S3).

2. Procédé selon la revendication 1, **caractérisé en ce qu'**au moins un opérande d'addition de perturbation (y1-y7) décrit la dynamique du véhicule et/ou l'usure du véhicule et/ou la consommation de carburant et/ou la sollicitation d'un occupant du véhicule au moyen d'une fonction de quantification..

3. Procédé selon l'une des revendications précédentes, **caractérisé en ce que** la trajectoire alternative (T1, T2, T3) définit un paramètre d'un mécanisme de roulement adaptatif et/ou d'un système de régulation de dynamique verticale adaptatif.

4. Procédé selon l'une des revendications précédentes, **caractérisé en ce qu'**au moins un facteur de pondération (w1-w7) dépend d'autres opérateurs d'addition de perturbation (yl-y7).

5. Procédé selon l'une des revendications précédentes, **caractérisé en ce que** la valeur d'au moins un facteur de pondération (w1-w7) est réglée en fonction d'une entrée d'utilisateur.

6. Procédé selon l'une des revendications précédentes, **caractérisé en ce qu'**un signal d'avertissement (9) est émis lorsqu'une partie de la trajectoire d'origine est remplacée par la trajectoire alternative (T1, T2, T3).

7. Procédé selon l'une des revendications précédentes, **caractérisé en ce qu'**au moins une partie de la trajectoire alternative (T1, T2, T3) est calculée à l'aide d'un procédé temporellement optimisé prédéterminé si une distance temporelle requise (T) jusqu'à l'obstacle (1) n'est pas atteinte.

8. Dispositif de commande (8), conçu pour mettre en œuvre l'un des procédés précédents.

9. Véhicule automobile (4), comprenant un dispositif de commande selon la revendication 8.
